# EUROPEAN PATENT SPECIFICATION

(11) **EP 3 405 644 B1**
(45) Date of publication and mention of the grant of the patent: **29.04.2020**
(21) Application number: 17717818.3
(22) Date of filing: 22.03.2017
(51) Int. Cl.: E21B 17/042, E21B 17/08

(54) **PIPE COUPLING**
ROHRKUPPLUNG
RACCORD DE TUYAU

(30) Priority: 22.03.2016 GB 201604872
(43) Date of publication of application: 28.11.2018
(73) Proprietor: Oil States Industries (UK) Limited, Nigg, Aberdeen, Scotland AB12 3GQ (GB)
(72) Inventor: SINCLAIR, David Malcolm, Aberdeen Aberdeenshire AB15 8LQ (GB)
(74) Representative: Murgitroyd & Company
(86) International application number: PCT/GB2017/050809
(87) International publication number: WO 2017/163067

(56) References cited:
- US-A- 2 539 057
- US-A1- 2003 038 476
- US-A1- 2014 050 522

## Description

This invention relates to a pipe coupling and more specifically to a pipe coupling for connecting metal pipe sections of pipe strings and more particularly to a pipe coupling for connecting risers and flowline pipelines together in the oil and gas industries.

A riser is typically a pipe that connects an offshore floating production structure or a drilling rig to a sub-sea system either for production purposes such as drilling, production, injection and export, or for drilling, completion or workover purposes.

A flowline is typically a surface pipeline which is connected to the wellhead and carries total produced fluids such as oil, as and production water from the well to the first piece of production equipment, such as a production separator for example.

There are various known methods for joining risers and flowline pipes together including welded forged connections and threaded and coupled connections.

In the former, typically pin and box connectors are machined out of forgings and then welded to either end of the riser and the flowline. The connectors are then assembled to attach the pipe and flowline together.

In the latter case, threaded male pin connectors are machined directly onto the ends of the riser and flowline and a coupling consisting of a back to back female box connector with cooperating threads. The threaded male pin connectors of the riser and flowline are connected to opposite ends of the female box connector to attach the riser and flowline together.

Threaded and coupled techniques offer a number of advantages over welded forged connections. No welding is required and therefore it can be a lower cost method for joining flowline and risers together. Also, the absence of welding makes it easier to meet the requirements for sour service which typically relates to well fluids which contain a significant amount of hydrogen sulphide when using higher strength steels. Hydrogen sulphide is hazardous to human health and could significantly impact on the performance of steel drilling tubulars and pipes and therefore higher strength steels are typically used for these operations.

However, threaded and coupled connections are not universally adapted for all connection profiles as some require a greater thickness of the pipe required for the threaded pin component in order to accommodate the external metal to metal seal and abutment face which is necessary for assembly, breakout, preload and sealing purposes.

So called MERLIN type pipe connectors which were invented by the applicant are known in the art for connecting pipes together and are disclosed for example in GB1573945, GB2033518, GB2099529. GB2113334 and GB2138089. An example of a known MERLIN connector is shown in Figure 1. The connection is formed by a tubular pin member 1 having a frustoconical outer peripheral surface 2 and a tubular box member 3 having a generally frustoconical inner peripheral surface 4 corresponding to the frustoconical outer peripheral surface of the pin member. In use, the two members each associated with a pipe section, are telescoped together and are axially locked together by mating annular projections and grooves forming teeth 5 provided on the said peripheral surfaces, the projections and grooves being spaced apart along the two surfaces. Document US2003/038476 A1 relates to a threaded connector having a separate rigid external seal/support ring affixed to the connector pin for engaging the box.

The metal to metal seal between the pin member and the box member is provided by machining a nib or projection 6 into the end of the pin member and a corresponding groove 7 into the base of the box member. The connector is made up by stabbing the pin 1 into the box 2 until the teeth 5 begin to mesh, then injecting hydraulic pressure into the connection which expands the box 2 and/or contracts the pin 1 to allow the pin to be fully pushed into the box at which point the teeth 5 are fully engaged. Upon release of the pressure, the box shrinks around the pin. The wedging action of the teeth 5 converts radial preload into an extremely high axial preload that maintains connector stiffness and enhances axial and bending fatigue characteristics.

Pressurised hydraulic fluid is also used to disengage the members by expanding the box and/or contracting the pin member to bring the annular teeth out of engagement with the annular grooves on the corresponding frustoconical peripheral surfaces which allows the pin member to be pulled from the box member.

Such a connection allows for the connector to be formed from relatively thin steel forgings which provides substantive savings in material costs.

However, such a connection cannot typically be adapted for use in a threaded and coupled pipe to pipe connection because as note above as the pin component requires more than the thickness of the pipe to accommodate the external metal to metal seal and abutment face which is necessary for assembly, breakout, preload and sealing purposes.

The present invention aims to provide a pipe to pipe coupling which retains the advantages of a threaded and coupled connection whilst increasing the range of fittings over which the coupling can be used.

Furthermore, the present invention aims to provide a method of connecting pipe to pipe, or riser to flowline, which overcomes or at least mitigates the above noted problems.

According to one aspect of the present invention there is provided a pipe connector comprising a tubular pin member having an outer peripheral surface and a tubular box member having an inner peripheral surface corresponding to the outer peripheral surface of the pin member and which overlies the outer peripheral surface of the pin member when the members are fully engaged together, the members being provided with inter engaging projections and grooves on said peripheral surfaces for axially locking the members together when they are fully engaged together, the pin member further comprising an annular collar shrink fitted on to the pin member internally/adjacent/above of the peripheral outer surface, the collar comprising a shoulder at one end of the collar adjacent the peripheral outer surface of the pin member, the arrangement being such that when the members are fully engaged together, the tubular box member abuts the shoulder of the annular collar.

Preferably the outer peripheral surface of the pin member is generally frustoconical. Preferably also the inner peripheral surface of the box member is generally frustoconical.

Alternatively, the outer peripheral surface of the pin member and the inner peripheral surface of the box member may be generally straight.

Preferably, the projections and grooves on the peripheral surfaces of the pin and box members are substantially annular.

Advantageously the substantially annular projections and grooves are spaced apart along the surfaces.

Conveniently the substantially annular projections and grooves are equally spaced apart along the surfaces.

Alternatively, the projections and grooves on the peripheral surfaces of the pin and box members are helical.

Conveniently the box member comprises a body with two opposed ends, each of the opposed ends being adapted to receive a respective pin member.

Conveniently sealing means are provided at the respective ends of the pin and box.

Preferably the sealing means comprise a metal to metal seal.

Advantageously the sealing means comprise a projection or nib provided on one of the pin and box members and a groove on the other of the pin and box members.

Advantageously the inner surface of collar and/or the outer surface of pin are roughened prior to shrink fitting the collar in place on the pin member.

Alternatively the sealing means may comprise a resilient member between the pin and box components.

Conveniently the resilient sealing means may comprise an o-ring.

Advantageously the frustoconical surfaces taper inwardly towards the free ends of the pin and box members.

Preferably the collar is mounted on the first and second conduits by shrink fitting the collar into the desired position.

According to a further aspect of the present invention there is provided a pipeline comprising a plurality of pipe sections connected together through connections as described in accordance with the first aspect of the present invention.

Embodiments of the present invention will now be described with reference to and as shown in the accompanying drawings in which:

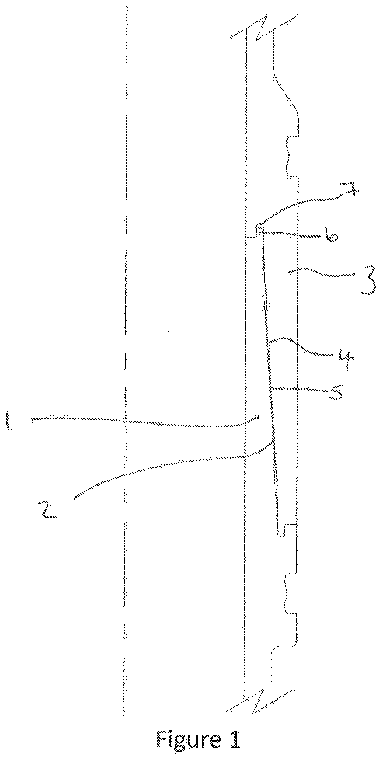

Figure 1 is a schematic cross sectional view of a prior art pipe coupling;
Figure 2 is a schematic cross sectional view of a pipe coupling according to a first embodiment of the present invention;
Figure 3 is an enlarged view of an alternative abutment face of the pipe coupling of Figure 2;
Figure 4 is a schematic cross sectional view of a pipe coupling according to a second embodiment of the present invention, and
Figure 5 is a schematic cross sectional view of a pipe coupling according to a third embodiment of the present invention.

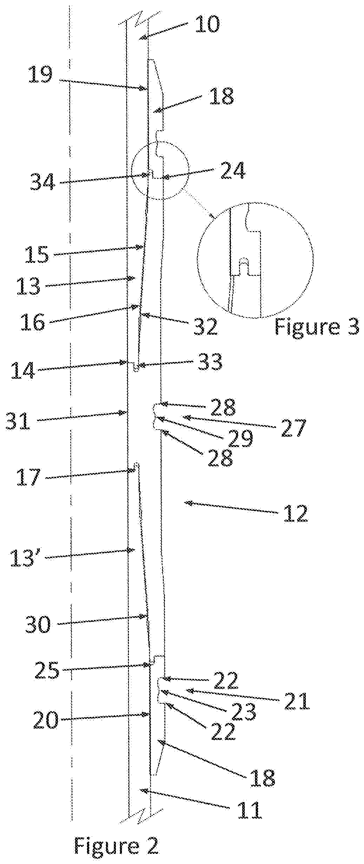

Turning now to Figure 2, there is depicted a pipe coupling according to a first embodiment of the present invention. In this embodiment a MERLIN type connector is adapted for a threaded and coupled pipe coupling. A first pipe 10 is connected to a second pipe 11 through a coupling 12. The first pipe has a tubular pin member 13 provided at the free end of the pipe 14. This may be machined into the end of the pipe in accordance with a know procedure.

The outer peripheral surface 15 of the pin member is frustoconical and tapers towards the free end of the pipe. Annular projections 16 are provided along the frustoconical outer surface 15 of the pin member. The annular projections are spaced apart along the frustoconical surface and form annular teeth around the outer peripheral surface of the pin member.

The second pipe 11 has a similar pin member 13' formed at the free end of the pipe 14.

Each of the pin members 13, 13' have an axially aligned nib or projection 17 machined into the end of the pin member and which projects beyond the free end of the pin member. In the embodiment shown, the nib or projection extends from the outer surface of the pin member.

An external annular collar 18 is provided on the first and second pipe ends. The collar is mounted above the frustoconical section 15 of the pin member of each pipe such that the frustoconical section is formed between the collar 18 and the free end 14 of the pin member. The collar is preferably formed of high strength steel with a yield strength greater than 550 MPa, which may typically be the same as or greater than the yield strength of the pipe. As the collar is externally mounted on the pin members and does not come into contact with well fluids, the metallurgical properties of the collar do not have to meet the same high standards as the pipe itself which will be in contact with well fluids. This is particularly relevant where the connector is being used in applications where sour service is required as the properties of the pipe must be able to withstand the effects that an elevated level of hydrogen sulphide in the well fluids places upon it. However the collar can be formed of a different material even when the pipe is to be used in the transport of such hazardous fluids thereby reducing the overall costs of the connector.

The annular collar 18 has an internal profile 19 that substantially matches the external profile 20 of the pipe above the pin member. Preferably the annular collar will be mounted on an annular section of pipe and therefore both the external surface of the pipe and the internal surface of the collar will be annular. Prior to mounting the collar above the pin member, the internal surface of the collar and/or the external surface of the pipe may be conditioned in order to improve the axial capacity of the interference fit of the collar on the pipe. Conditioning of the surfaces may also improve the fatigue resistance of the collar. For example, the respective surfaces of either of both of the collar and the pipe may be abraided or scored to roughen the surfaces prior to mounting the collar in position. A coating may be applied to the surfaces to achieve the required surface conditioning. The coating may comprise particulate material which provides a rough surface on the collar or pipe. Additionally or alternatively, projections and grooves (not shown) may be provided on either or both of the cooperating surfaces of the collar and the pipe to interlock the collar and pipe together once the collar is mounted to the pipe.

In the embodiment shown, the external profile of the collar has a groove 21 shaped to receive a clamp (not shown) to assist in making and breaking the connection between adjacent pipe ends as will be described further below. The groove in this embodiment is substantially C-shaped and has opposed side walls 22 with a bottom wall 23 connecting the side walls together. The bottom wall of the groove in the embodiment shown is profiled to receive a particular form of clamp but the groove may have any required profile depending upon the clamp being used.

The collar 18 is preferably mounted to the pipe by shrink fitting the collar around the pipe at the appropriate location. The collar is initially heated to expand the internal diameter of the collar and is then placed over the free end of the pin member 13 and moved over the frustoconical surface 15 of the pin member to the required position above the frustoconical surface. The collar is then cooled in place and shrinks into an interference fit with the pin end.

In the embodiment shown, the lower end of the collar 24, adjacent to the pin end of the pipe has an axial groove 25 formed therein. The groove in this embodiment is at the internal surface of the collar, although in other embodiments, the groove may be in different positions, for example along the end surface between the inner and outer edges of the collar. Figure 3 shows such an alternative embodiment with the groove formed between the inner and outer edges of the collar.

The coupling 12 in the embodiment shown comprises a double ended box component 26 into which the pin ends 13 of the first and second pipes can be inserted in order to connect the first and second pipes together.

The box component is a substantially cylindrical sleeve with an external profile which may be substantially cylindrical as shown in Figure 2. A groove 27 to accommodate a clamp is formed in the centre of the external surface of the box component. The groove is similar in form to the grooves in the collars on each pipe end with side walls 28 connected by a bottom wall 29.

The internal profile 30 of the box component tapers inwardly from each end towards a central boss 31. Annular projections 32 forming teeth are provided on the upper and lower tapered surfaces, the teeth corresponding in pitch and position to the teeth on the pin ends of the first and second pipes. An annular groove 33 is formed between the external surface of the boss and the lower end of each of the tapered inner surfaces of the box. The grooves are formed to accommodate the nib or projection of the pin of the pipe ends as will be described further below.

A nib or projection 34 is formed at the outer ends of the tapered surfaces of the box component. The nib or projection is preferably integrally formed at the inner surface of the box member.

The wall thickness of the box member at the central boss portion 31 is substantially similar to the thickness of the pipe at the annular collar.

The nibs or projections 17 at the ends of the pipe ends and the annular groove 33 around the boss of the box component provide a means for sealing at the end of the frustoconical surface 15 of the pin member and a means to guard against any inadvertent escape of the pressurised hydraulic fluid from between the members during disengagement of the members.

In use of the connector, the external collars 18 are selected with an internal diameter appropriate to be mounted onto the pipe ends and the collars are shrink fitted onto the pin ends of the first and second pipe components as described above. The pin 13 of the first pipe component is then coupled to one end of the double ended box component 26. Typically these steps will be completed on shore during fabrication of the various components.

The first end of the connector is made up by stabbing the pin end 13 of the first pipe into one end of double ended box component 26 until the annular teeth 16 on the cooperating frustoconical surfaces 15 of the pin and 30 of the box members begin to mesh. A clamp is then connected between the profiled grooves on the outer surface of the annular collar and the outer surface of the box component. Pressurised hydraulic fluid is then injected into the connection through an injection site port (not shown) to expand the box and/or contracts the pin and the clamp is operated to pull the pin fully into the box at which point the teeth are fully engaged.

As the pin end is fully pushed into the box component, the nib or projection 17 at the free end of the pin member extends into the annular groove 33 at the base of the boss 31 of the box component and the nib or projection 34 at the top of the tapered surface 30 of the box component extends into the annular groove 25 in the lower surface 24 of the annular collar 18 until the upper surface of the box component fully abuts the lower surface 24 of the collar. This provides a metal to metal seal at each end of the connection surfaces between the pin member and the box component.

As the collar is shrink fit onto the outer surface of the pipe, the lower surface of the collar 24 provides a solid abutment surface to provide a means for sealing and preload generation within the connector but without carrying the primary loads of the riser and flowline pipe. In the embodiment shown, the abutment surfaces between the lower surface of the collar and the upper surface of the box component are cylindrical but in other embodiments this surface may be tapered.

Upon release of the hydraulic pressure, the box 26 shrinks around the pin 13. The wedging action of the annular teeth 15, 32 converts radial preload into an extremely high axial preload that maintains connector stiffness and enhances axial and bending fatigue characteristics. The clamp can then be released from the collar and box component.

The coupling may be transported in this partially made up condition to an offshore facility for final connection.

When it is intended to complete the pipe connection a second pipe end 11 is connected into the opposite end of the box component 26. The second end of the connector is made up in the same way as the first with the pin member 13' of the pipe end 11 being stabbed into the box component until the annular teeth begin to mesh and then hydraulic pressure is injected between the pin and box components as before to allow the second pipe end to be fully pushed into the second end of the box component.

The embodiment described above provides a pipe coupling in which a MERLIN type connector is adapted for a threaded and coupled connection to provide the advantages of the MERLIN type connection with a very thin walled frustoconical pin mounted within a think walled frustoconical box component.

This provides the advantages that the connections are reusable, only require visual inspection, have high levels of preload, improving the fatigue performance, metal to metal seals are provided at either end of the connections to protect the connector teeth and in addition to seal against internal and external pressure. Furthermore under high internal pressures the collar will provide restraint in the hoop direction thus providing the MERLIN type thinner machined pipe connector of pin profile with additional support.

Make up of the connector is visually confirmed by inspecting the external abutment faces between the ends of the box component and the annular collars.

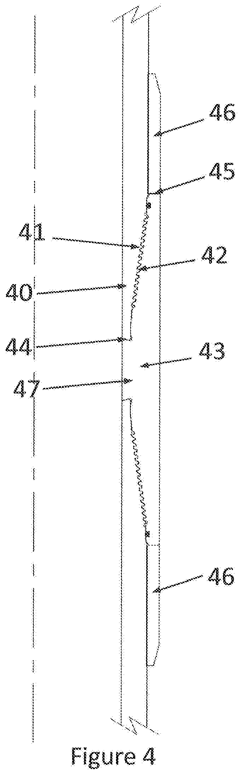

Whilst the embodiment of Figure 2 shows a MERLIN type connector, it is envisaged that the pipe connection of the present invention may be adapted to be used in a more conventional helically threaded connector as shown in Figure 4. In this embodiment, the pin member 40 of the pipe ends carries a conventional helical screw thread 41 and a cooperating screw thread 42 is provided on the tapered internal surfaces of the double ended box component 43. The interengaging thread provide the sealing means between the pin and box components and therefore the outer ends of the pin member 44 and the box member 45 are shaped to provide cooperating abutment faces without the nib or projection and grooves of the first embodiment.

An annular collar 46 is mounted to the first and second pipe members as previously described in relation to the first embodiment.

In this embodiment, the first end of the connection is made up by threading the first pipe end 40 into one end of the threaded box component 43 until the outer end of the pin member 44 abuts the internal boss 47 of the box component and the outer end of the box component 45 abuts the lower edge of the collar 46 of the first pipe. When it is required to make up the other end of the connection, the pin member of the second pipe is threaded up to the lower end of the box component until the outer end of the pin member abuts the central boss of the box component and the outer end of the box component abuts the lower edge of the collar of the second pipe member.

The collar allows the generation of a high preload in the connection at the outer abutment face 45 thus improving the fatigue performance in this part of the connection. In conventional threaded and coupled connections a weak point in fatigue is where each pipe end enters the coupling due to the lack of preload in this area.

Whilst the annular collar 46 is shown as having a relatively short length in the embodiments illustrated above, the axial length of the collar may be varied in different embodiments.

For example, the collar may be extended where necessary along the outer surface of the pipe to which it is mounted. Additionally, the outer profile of the collar may be modified without affecting the operation of the collar.

The profile of the clamp groove may be changed in order to accommodate different or varying sized clamps.

Additionally the position of the clamp groove, which is shown as being in the lower part of the outer surface of the collar in the illustrated embodiments, may be varied.

The angle of the tapered shoulder at the top outer surface of the collar may be varied or alternatively may be replaced with a straight profile in some embodiments.

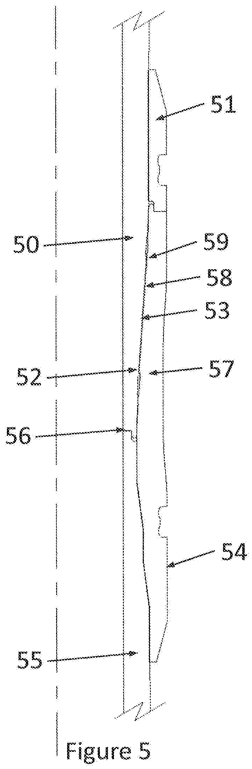

A further embodiment of the present invention in which the axial collar on one pipe end is extended to form the box component of the connection is shown in Figure 5. In this embodiment, the first pipe end 50 is prepared in the same way as the first embodiment with a relatively short annular collar 51 shrink fitted onto the pipe end above a machined frustoconical pin 52 which is formed with projections and grooves 53 to form concentric teeth around the frustoconical surface.

An external annular collar 54 is also shrink fitted onto the other pipe end 55 but thiis collar extended such that the collar extends beyond the free end 56 of the pipe upon which it is mounted. The portion of the extended collar which abuts the outer surface of the pipe, and/or the outer surface of the pipe itself may be conditioned in the same way as described with reference to the first embodiment.

The box component 57 in this embodiment is not double ended but only has a single frustoconical surface 58 provided with annular teeth 59. The frustoconical surface of the box component is provided at the remote end of the box component in the region which extends beyond the free end of the pipe to which the box component is mounted.

The connection is made up by stabbing the pin member 52 of the first pipe component into the box member 57 formed by the extended annular collar of the second pipe component until the teeth 53, 59 on the frustoconical surfaces of the pin and box member begin to mesh. As with the first embodiment described above, hydraulic pressure is then injected between the tapered surfaces of the pin and box components to expand the box and/or contract the pin to allow a clamp to draw the pin fully into engagement within the box.

When the pin of the first pipe is fully engaged in the box of the second pipe the outer edge of the collar 54 of the second pipe directly abuts against the outer edge of the annular collar 51 of the first pipe.

An internal metal to metal seal is provided between the pin member of the first pipe and the free end of the second pipe and an external metal to metal seal is provided between the free end of the extended collar on the second pipe and the annular collar on the first pipe.

This embodiment provides for a connection between successive pipe members through a single pin and box connection without the need for a separate box component between successive pipe members. This can reduce the material required for the connection and can lead to further cost savings whilst increasing the range of pipe connections over which the present invention can be successfully applied to provide the significant advantages already described.

## Claims

1. A pipe connector (12) comprising tubular pin member (13;) having an outer peripheral surface (15) and a tubular box member (12) having an inner peripheral surface corresponding to the outer peripheral surface of the pin member and which overlies the outer surface of the pin member when the members are fully engaged together, **characterised in that** the members being provided with inter engaging substantially annular projections (16,32) and grooves (33) on said peripheral surfaces for axially locking the members together when they are fully engaged together, the pin member further comprising an annular collar (18) shrink fitted onto the pin member above of the peripheral outer surface, the collar comprising a shoulder (24) at one end of the collar adjacent the outer peripheral surface of the pin member, the arrangement being such that when the members are fully engaged together, the tubular box member abuts the shoulder (24) of the annular collar.

2. A pipe connector according to claim 1, wherein the outer peripheral surface of the pin member and the inner peripheral surface of the box member are substantially frustoconical.

3. A pipe connector according to claim 2, wherein the frustoconical surfaces taper inwardly towards the free ends of the pin and box members.

4. A pipe connector according to any of the preceding claims, wherein the substantially annular projections and grooves are spaced apart along the surfaces.

5. A pipe connector according to claim 4, wherein the substantially annular projections and grooves are equally spaced apart along the surfaces.

6. A pipe connector according to any of the preceding claims, wherein the box member comprises a body with two opposed ends, each of the opposed ends being adapted to receive a respective pin member.

7. A pipe connector according to any of claims 1-6, wherein the inner surface of collar and/or the outer surface of pin are roughened prior to shrink fitting the collar in place on the pin member.

8. A pipe connector according to any of the preceding claims, wherein sealing means (17,33;24,25) are provided between the pin and box.

9. A pipe connector according to claim 8, wherein the sealing means comprises a metal to metal seal.

10. A pipe connector according to claim 9, wherein the sealing means comprise a projection or nib (17;34) provided on one of the pin and box members and a cooperating groove (33;25) on the other of the pin and box members.

11. A pipe connector according to claim 10, wherein the sealing means comprises a resilient member mounted between the pin and box components.

12. A pipe connector according to claim 11, wherein the resilient sealing means comprises an o-ring.

13. A pipeline comprising a plurality of pipe sections connected together via pipe connectors according to any of claims 1-12.

## Patentansprüche

1. Ein Rohrverbinder (12), der ein röhrenförmiges Zapfenelement (13) mit einer Außenumfangsfläche (15) und ein röhrenförmiges Muffenelement (12) mit einer Innenumfangsfläche, die der Außenumfangsfläche des Zapfenelements entspricht und die die äußere Oberfläche des Zapfenelements überlagert, wenn die Elemente vollständig miteinander im Eingriff stehen, beinhaltet, **dadurch gekennzeichnet, dass** die Elemente mit ineinander eingreifenden, im Wesentlichen ringförmigen Vorsprüngen (16, 32) und Nuten (33) auf den Umfangsflächen versehen sind, um die Elemente axial miteinander zu verriegeln, wenn sie vollständig im Eingriff stehen, wobei das Zapfenelement ferner eine ringförmige Manschette (18) beinhaltet, die über der Umfangsaußenfläche auf das Zapfenelement schrumpfgepasst ist, wobei die Manschette eine Schulter (24) an einem Ende der Manschette neben der Außenumfangsfläche des Zapfenelements beinhaltet, wobei die Anordnung derart ist, dass, wenn die Elemente vollständig miteinander im Eingriff stehen, das röhrenförmige Muffenelement an die Schulter (24) der ringförmigen Manschette anliegt.

2. Rohrverbinder gemäß Anspruch 1, wobei die Außenumfangsfläche des Zapfenelements und die Innenumfangsfläche des Muffenelements im Wesentlichen kegelstumpfförmig sind.

3. Rohrverbinder gemäß Anspruch 2, wobei sich die kegelstumpfförmigen Oberflächen einwärts in Richtung der freien Enden des Zapfen- und des Muffenelements verjüngen.

4. Rohrverbinder gemäß einem der vorhergehenden Ansprüche, wobei die im Wesentlichen ringförmigen Vorsprünge und Nuten entlang den Oberflächen mit Abstand angeordnet sind.

5. Rohrverbinder gemäß Anspruch 4, wobei die im Wesentlichen ringförmigen Vorsprünge und Nuten entlang den Oberflächen mit gleichem Abstand angeordnet sind.

6. Rohrverbinder gemäß einem der vorhergehenden Ansprüche, wobei das Muffenelement einen Körper mit zwei entgegengesetzten Enden aufweist, wobei jedes der entgegengesetzten Enden angepasst ist, ein jeweiliges Zapfenelement aufzunehmen.

7. Rohrverbinder gemäß einem der Ansprüche 1-6, wobei die innere Oberfläche der Manschette und/oder die äußere Oberfläche des Zapfens vor dem Schrumpfpassen der Manschette in Position auf dem Zapfenelement aufgeraut werden.

8. Rohrverbinder gemäß einem der vorhergehenden Ansprüche, wobei zwischen dem Zapfen und der Muffe ein Abdichtmittel (17, 33; 24, 25) bereitgestellt ist.

9. Rohrverbinder gemäß Anspruch 8, wobei das Abdichtmittel eine Metall-auf-Metall-Dichtung beinhaltet.

10. Rohrverbinder gemäß Anspruch 9, wobei das Abdichtmittel einen Vorsprung oder eine Nase (17; 34), die/der an einem von dem Zapfen- und dem Muffenelement bereitgestellt ist, und eine damit zusammenwirkende Nut (33; 25) an dem anderen von dem Zapfen- und dem Muffenelement beinhaltet.

11. Rohrverbinder gemäß Anspruch 10, wobei das Abdichtmittel ein elastisches Element beinhaltet, das zwischen der Zapfen- und der Muffenkomponente angebracht ist.

12. Rohrverbinder gemäß Anspruch 11, wobei das elastische Abdichtmittel einen O-Ring beinhaltet.

13. Eine Rohrleitung, die eine Vielzahl von Rohrabschnitten beinhaltet, welche über Rohrverbinder gemäß einem der Ansprüche 1-12 miteinander verbunden sind.

## Revendications

1. Un raccord de tuyaux (12) comprenant un élément formant broche tubulaire (13) ayant une surface périphérique externe (15) et un élément formant manchon tubulaire (12) ayant une surface périphérique interne correspondant à la surface périphérique externe de l'élément formant broche et qui se superpose à la surface externe de l'élément formant broche lorsque les éléments sont pleinement en prise l'un avec l'autre, **caractérisé en ce que** les éléments sont pourvus de saillies (16, 32) et rainures (33) de mise en prise réciproque substantiellement annulaires sur lesdites surfaces périphériques pour verrouiller axialement les éléments ensemble lorsqu'ils sont pleinement en prise l'un avec l'autre, l'élément formant broche comprenant en sus un collier annulaire (18) ajusté par contraction sur l'élément formant broche au-dessus de la surface périphérique externe, le collier comprenant un épaulement (24) au niveau d'une extrémité du collier adjacente à la surface périphérique externe de l'élément formant broche, l'agencement étant tel que lorsque les éléments sont pleinement en prise l'un avec l'autre, l'élément formant manchon tubulaire est en aboutement avec l'épaulement (24) du collier annulaire.

2. Un raccord de tuyaux selon la revendication 1, dans lequel la surface périphérique externe de l'élément formant broche et la surface périphérique interne de l'élément formant manchon sont substantiellement tronconiques.

3. Un raccord de tuyaux selon la revendication 2, dans lequel les surfaces tronconiques s'effilent vers l'intérieur vers les extrémités libres des éléments formant broche et manchon.

4. Un raccord de tuyaux selon n'importe lesquelles des revendications précédentes, dans lequel les saillies et rainures substantiellement annulaires sont espacées les unes des autres le long des surfaces.

5. Un raccord de tuyaux selon la revendication 4, dans lequel les saillies et rainures substantiellement annulaires sont espacées de manière égale les unes des autres le long des surfaces.

6. Un raccord de tuyaux selon n'importe lesquelles des revendications précédentes, dans lequel l'élément formant manchon comprend un corps avec deux extrémités opposées, chacune des extrémités opposées étant conçue pour recevoir un élément formant broche respectif.

7. Un raccord de tuyaux selon n'importe lesquelles des revendications 1 à 6, dans lequel la surface interne de collier et/ou la surface externe de broche sont rugosifiées préalablement à l'ajustage par contraction du collier en place sur l'élément formant broche.

8. Un raccord de tuyaux selon n'importe lesquelles des revendications précédentes, dans lequel des moyens d'étanchéification (17, 33 ; 24, 25) sont fournis entre la broche et le manchon.

9. Un raccord de tuyaux selon la revendication 8, dans lequel le moyen d'étanchéification comprend un joint d'étanchéité métal sur métal.

10. Un raccord de tuyaux selon la revendication 9, dans lequel les moyens d'étanchéification comprennent une saillie ou un bec (17 ; 34) fourni(e) sur un élément parmi les éléments formant broche et manchon et une rainure coopérante (33 ; 25) sur l'autre élément parmi les éléments formant broche et manchon.

11. Un raccord de tuyaux selon la revendication 10, dans lequel le moyen d'étanchéification comprend un élément résilient monté entre les composants formant broche et manchon.

12. Un raccord de tuyaux selon la revendication 11, dans lequel le moyen d'étanchéification résilient comprend un joint torique.

13. Une canalisation comprenant une pluralité de sections de tuyaux raccordées les unes avec les autres par l'intermédiaire de raccords de tuyaux selon n'importe lesquelles des revendications 1 à 12.
